# EUROPEAN PATENT APPLICATION

(11) **EP 4 443 753 A1**
(43) Date of publication of application: **09.10.2024**
(21) Application number: 23759755.4
(22) Date of filing: 13.02.2023
(51) Int. Cl.: H04B 5/02, G05B 23/02, H04Q 9/00

(54) **COMMUNICATION APPARATUS AND AIR-CONDITIONING SYSTEM DIAGNOSIS APPARATUS**

(30) Priority: 24.02.2022 JP 2022026713
(71) Applicant: DAIKIN INDUSTRIES, LTD., Osaka-shi, Osaka 530-0001 (JP)
(72) Inventor: URATA, Kensuke, Osaka-shi, Osaka 530-0001 (JP); HIGASHIYAMA, Shin, Osaka-shi, Osaka 530-0001 (JP); MIURA, Takafusa, Osaka-shi, Osaka 530-0001 (JP); HOTTA, Kosuke, Osaka-shi, Osaka 530-0001 (JP); KODERA, Keita, Osaka-shi, Osaka 530-0001 (JP); TOK, Chang Wenn, Osaka-shi, Osaka 530-0001 (JP)
(74) Representative: Hoffmann Eitle
(86) International application number: PCT/JP2023/004800
(87) International publication number: WO 2023/162752

(57) **Abstract**

A communication apparatus includes: a coupler (10) to be proximately coupled to a communication line (L) connected between communication devices (101, 102); and a communicator (40) configured to communicate with the communication devices (101, 102) via the communication line (L) and the coupler (10) proximately coupled.

## Description

### TECHNICAL FIELD

The present disclosure relates to a communication apparatus and an air-conditioning system diagnosis apparatus.

### BACKGROUND ART

In some cases, an air-conditioning system is connected to a diagnosis apparatus for collecting operation data, failure diagnoses, or other purposes (see, e.g., Patent Document 1).

### CITATION LIST

### PATENT DOCUMENT

Patent Document 1: Japanese Unexamined Patent Publication No. 2020-091561

### SUMMARY OF THE INVENTION

### TECHNICAL PROBLEM

The example of Patent Document 1 fails to study a method of physically connecting the diagnosis apparatus and the air-conditioning system.

It is an object of the present disclosure to facilitate physical connection between a communication apparatus and a communication partner.

### SOLUTION TO THE PROBLEM

A first aspect of the present disclosure is directed to a communication apparatus including:
a coupler (10) to be proximately coupled to a communication line (L) connected between communication devices (101, 102); and
a communicator (40) configured to communicate with the communication devices (101, 102) via the communication line (L) and the coupler (10) proximately coupled.

In the first aspect, the proximity coupling provides a communication path. The first aspect facilitates the physical connection between the communication apparatus and the communication partner.

A second aspect of the present disclosure is an embodiment of the communication apparatus according to the first aspect. In the second aspect,
the communication devices (101, 102) are connected on a multihop network, and the communicator (40) transmits, through relay by a predetermined one of the communication devices (101, 102) on the multihop network, a signal to the other one of the communication devices (101, 102).

The second aspect establishes the communication between the communication apparatus and the communication partner on the multihop network.

A third aspect of the present disclosure is an embodiment of the communication apparatus according to the first or second aspect. In the third aspect,
the coupler (10) is proximately coupled to the communication line (L) by an inductive or capacitive member.

In the third aspect, an inductive or capacitive member achieves the proximity coupling.

A fourth aspect of the present disclosure is an embodiment of the communication apparatus according to the third aspect. In the fourth aspect,
the coupler (10) is attachable to and detachable from the communication line (L).

The fourth aspect facilitates the attachment and detachment of the communication apparatus.

A fifth aspect of the present disclosure is an embodiment of the communication apparatus according to the fourth aspect. In the fifth aspect,
the coupler (10) is movable within a predetermined range of the communication line (L).

In the fifth aspect, the movement of the coupler (10) can improve the communication conditions.

A sixth aspect of the present disclosure is an embodiment of the communication apparatus according to any one of the first to fifth aspects. In the sixth aspect,
the communicator (40) performs at least one of collection of data stored in the communication devices (101, 102), collection of data flowing through the communication line (L), an operation instruction to the communication devices (101, 102), and setting of the communication devices (101, 102) via the coupler (10).

In the sixth aspect, the communication apparatus can collect information and control the communication partner.

A seventh aspect of the present disclosure is an embodiment of the communication apparatus according to any one of the first to sixth aspects. In the seventh aspect, the communication apparatus further includes:
a display (11, 50) configured to display quality of communication in the coupler (10).

An eighth aspect of the present disclosure is an embodiment of the communication apparatus according to the seventh aspect. In the eighth aspect,
the quality is indicated by a signal-to-noise ratio in the communication between the communication devices (101, 102) and the communicator (40).

A ninth aspect of the present disclosure is an embodiment of the communication apparatus according to the seventh or eighth aspect. In the ninth aspect,
the quality is indicated by a noise level in the communication between the communication devices (101, 102) and the communicator (40).

A tenth aspect of the present disclosure is an embodiment of the communication apparatus according to any one of the seventh to ninth aspects. In the tenth aspect,
the quality is indicated by a signal transmission and reception sensitivity in the communication between the communication devices (101, 102) and the communicator (40).

In the seventh to tenth aspects, the display of the quality improves the reliability of the communication.

An eleventh aspect of the present disclosure is an embodiment of the communication apparatus according to any one of the first to tenth aspects. In the eleventh aspect,
the communicator (40) transmits a signal at a higher signal level than the communication devices (101, 102).

The eleventh aspect improves the reliability of the communication.

A twelfth aspect of the present disclosure is an embodiment of the communication apparatus according to any one of the first to eleventh aspects. In the twelveth aspect,
the communication devices (101, 102) are units constituting an air-conditioning system (100).

The twelfth aspect allows easier connection between the unit of the air-conditioning system (100) and the communication apparatus.

A thirteenth aspect of the present disclosure is directed to an air-conditioning system diagnosis apparatus including the communication apparatus (10, 40) according to any one of the first to twelfth aspects.

The thirteenth aspect allows easier connection between the air-conditioning system (100) diagnosis apparatus and the air-conditioning system (100).

### BRIEF DESCRIPTION OF THE DRAWINGS

FIG. 1 is a block diagram showing a configuration of a diagnosis apparatus.
FIG. 2 is an example configuration of a coupler.
FIG. 3 is another example configuration of a coupler.
FIG. 4 is yet another example configuration of a coupler.
FIG. 5 illustrates communication between the diagnosis apparatus and units.

### DESCRIPTION OF EMBODIMENT

### «Embodiment»

### <Outline>

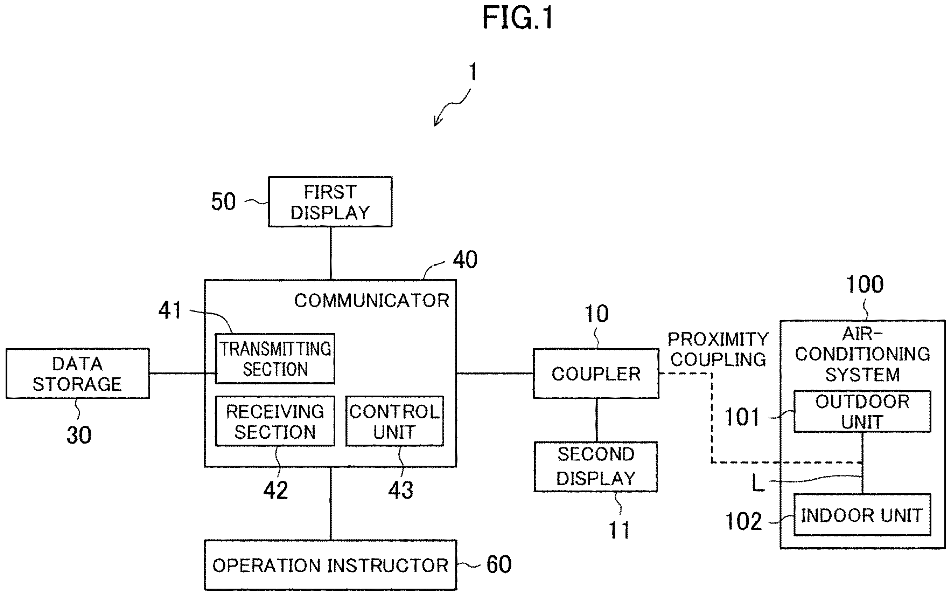

An air-conditioning system diagnosis apparatus according to this embodiment will be described with reference to the drawings. FIG. 1 is a block diagram showing a configuration of a diagnosis apparatus (1) according to this embodiment. The diagnosis apparatus (1) collects information on the operation conditions of the air-conditioning system (100) and performs failure diagnosis and other operations.

The air-conditioning system (100) functions to cool and heat a room. The air-conditioning system (100) includes an outdoor unit (101) and an indoor unit (102). In the following description, the outdoor unit (101) and the indoor unit (102) may be collectively referred to as units (101, 102).

While FIG. 1 shows only one outdoor unit (101) and only one indoor unit (102), the air-conditioning system (100) includes a plurality of outdoor units (101) and a plurality of indoor units (102). These units (101, 102) are connected to a refrigerant circuit (not shown) by refrigerant pipes.

The outdoor units (101) and the indoor units (102) function as communication devices. In the air-conditioning system (100), a predetermined one of the outdoor units (101) and a predetermined one of the indoor units (102) are connected to each other via a communication line (L). Predetermined outdoor units (101) are also connected to each other by a communication line (L). In the air-conditioning system (100), predetermined indoor units (102) are also connected to each other via a communication line (L).

The units (101, 102) connected by the communication line (L) exchange signals through the communication line (L). The signals exchanged between the units (101, 102) indicate values detected by sensors, various set values, and commands for instructing operations, for example.

In the air-conditioning system (100), the units (101, 102) connected to the communication line (L) constitute a multihop network. When transmitting a signal to any of the communication devices, the multihop network utilizes the other communication device as a relay of the signal. This enables wide-range communication. In the air-conditioning system (100), each unit (101, 102) can function as a relay.

### <Configuration of Diagnosis Apparatus (1)>

The diagnosis apparatus (1) can transmit a predetermined signal to the air-conditioning system (100) via the communication line (L). The diagnosis apparatus (1) can control and set the air-conditioning system (100) by means of the signal. The diagnosis apparatus (1) can detect a signal flowing through the communication line (L).

As shown in FIG. 1, the diagnosis apparatus (1) includes a coupler (10), a second display (11), a data storage (30), a communicator (40), a first display (50), and an operation instructor (60).

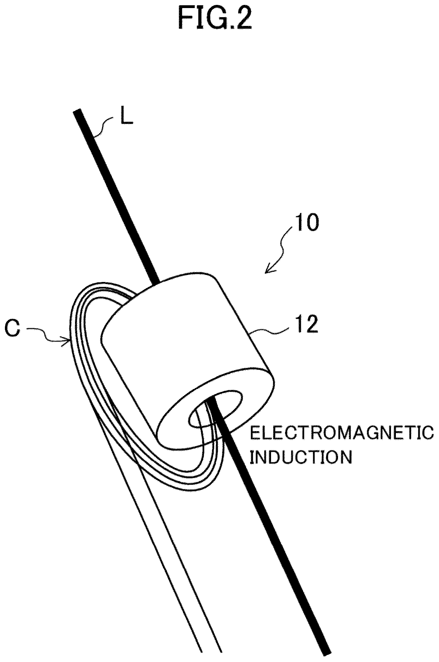

The coupler (10) is proximately coupled to the communication line (L). Here, the "proximately coupled" means magnetic field coupling via a coil or any other suitable tool or electric field coupling via an electrode. The coupler (10) is made of an inductive or capacitive member. FIGS. 2 to 4 show example configurations of the coupler (10).

In the example shown in FIG. 2, the coupler (10) includes a magnetic body (12) and a coil (C). The magnetic body (12) according to this example is a cylindrical ferrite core. The communication line (L) passes through the hollow of the magnetic body (i.e., the cylindrical ferrite core) (12). The magnetic body (12) and the communication line (L) are coupled magnetically. The coil (C) is wound through the magnetic body (12). The coil (C) and the magnetic body (12) are coupled magnetically.

Being the cylindrical ferrite core, the magnetic body (12) is movable on the communication line (L) within a predetermined range. By employing a two-piece ferrite core, the magnetic body (12) is attachable to and detachable from the communication line (L).

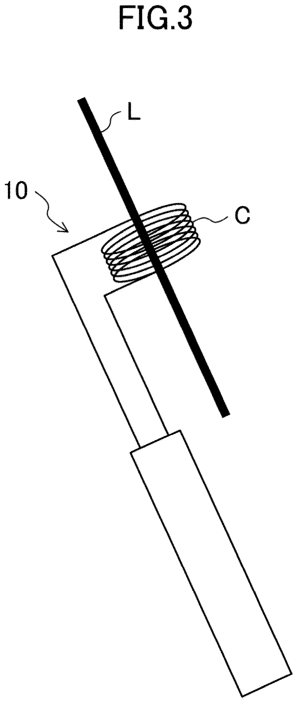

In the example shown in FIG. 3, the coupler (10) includes a coil (C). The coil (C) is wound around the communication line (L). The coil (C) and the communication line (L) are coupled magnetically.

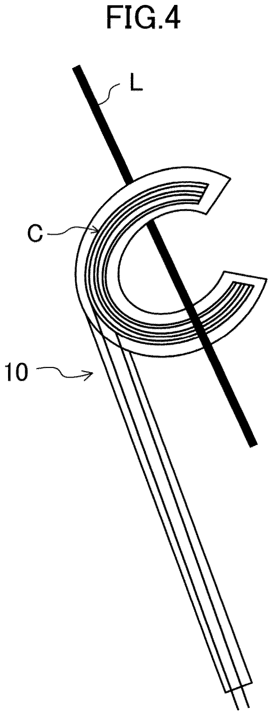

In the example shown in FIG. 4 as well, the coupler (10) includes a coil (C). The coil (C) and the communication line (L) are coupled magnetically. The coil (C) has a C-shaped appearance as viewed along the winding axis. The coil (C) is attachable to and detachable from the communication line (L). The coil (C) is movable on the communication line (L) within a predetermined range.

Once a current (i.e., a signal) flows through the communication line (L), the current also flows through the coil. In other words, the coupler (10) can detect a signal on the communication line (L). Once a current (i.e., a signal) flows through the coil (C), the signal also flows through the communication line (L). In other words, the coil (C) can be utilized to transmit a signal to the communication line (L).

The second display (11) displays the state of the signal (the quality of communication) in the coupler (10). The second display (11) may include a light emitting diode (LED), for example. The second display (11) is configured such that the light emitting diode emits light, for example, when a current flows through the coil (C). The presence or absence or the intensity of light emitted by the LED represents the quality of communication (e.g., a signal level).

The data storage (30) stores various data, which will be described later. The data storage (30) may be a semiconductor memory, for example.

The communicator (40) includes a transmitting section (41), a receiving section (42), and a control unit (43). The communicator (40) transmits and receives signals to and from (i.e., establish communication with) the units (i.e., the communication devices) (101, 102) via the communication line (L) and the coupler (10). In the diagnosis apparatus (1), the communicator (40) and the coupler (10) may be considered to constitute the communication apparatus (10, 40).

The communicator (40) functions to collect the data stored in the units (101, 102), collect the data flowing through the communication line (L), instruct the units (101, 102) to operate, and set the units (101, 102) via the coupler (10). Needless to mention, the communicator (40) may execute only part of these functions. The communicator (40) may further have another function.

The transmitting section(41) transmits a signal to the units (101, 102) under the control by the control unit (43). Specifically, the transmitting section (41) transmits a signal to be transmitted to the units (101, 102) to the communication line (L) via the coupler (10). This signal has a frequency within a range from about 2 MHz to about 30 MHz, for example. What is called "crosstalk" occurs between the coupler (10) and the communication line (L).

In this case, the transmitting section (41) transmits a signal at a higher signal level than in communication between the units (101, 102). In this embodiment, the transmitting section (41) employs such a signal level to improve the reliability of communication.

The receiving section (42) receives a signal output from the units (101, 102) under the control by the control unit (43). Specifically, the receiving section (42) receives a signal detected by the coupler (10). The receiving section (42) transmits the received signal to the control unit (43).

The receiving section (42) transmits, to the control unit (43), the information on the quality of the received signal. The quality of communication can be indicated by various criteria. For example, the quality can be indicated by the signal-to-noise ratio in the communication between the units (i.e., communication devices) (101, 102) and the communicator (40). The quality may be indicated by the noise level in the communication between the units (101, 102) and the communicator (40). The quality may be indicated by the signal transmission and reception sensitivity in the communication between the units (101, 102) and the communicator (40).

The control unit (43) controls the operations of the transmitting section (41) and the receiving section (42). The control unit (43) includes a CPU (e.g., a microcomputer) and a semiconductor memory (neither is shown). The semiconductor memory stores the programs for operating the CPU, for example. The control unit (43) exhibits a data collection function and a setting function by the CPU executing the programs.

When exhibiting the data collection function, the control unit (43) generates a signal (i.e., a command) for requesting the transmission of the data (hereinafter referred to as "stored data") stored in the units (101, 102). The stored data is log data indicating the operating state, for example. This signal generation is triggered by a user's instruction. The user's instruction is made via a user interface, which will be described later.

The control unit (43) transmits the generated command to the units (101, 102) via the transmitting section (41), when exhibiting the data collection function. The control unit (43) receives the stored data returned from the units (101, 102) via the receiving section (42). The control unit (43) may cause the first display (50), which will be described later, to display the received stored data. The control unit (43) may store the received stored data in the data storage (30).

The control unit (43) generates a signal (i.e., a command) for setting the units (101, 102), when exhibiting the setting function. Examples of the settings made by the setting function include the operation mode (e.g., the cooling operation or the heating operation) of the air-conditioning system (100) and the set temperature. This signal generation is triggered by a user's instruction. The user's instruction is made via a user interface, which will be described later. The control unit (43) transmits the generated command to the units (101, 102) via the transmitting section (41).

The first display (50) according to this embodiment is a liquid crystal display. The first display (50) displays various information in response to an instruction by the control unit (43). For example, the first display (50) displays user input (e.g., a set value), the type of command to be transmitted to the units (101, 102), the content of data received from the air-conditioning system (100), and other information. The first display (50) may display the quality of communication.

The operation instructor (60) generates a signal (i.e., a command) for causing the units (101, 102) to perform a predetermined operation. This signal generation is triggered by a user's instruction. The operation instructor (60) also functions as a user interface that receives an instruction from a user. The user here is a person who performs diagnosis, inspection, or other operation of the air-conditioning system (100), using the diagnosis apparatus (1).

The operation instructor (60) transmits the generated command to the units (101, 102) via the transmitting section (41). If there is a response to the transmitted command, the operation instructor (60) receives the response via the receiving section (42). The operation instructor (60) processes the response as appropriate. For example, the operation instructor (60) may cause the first display (50) to display the received response. The operation instructor (60) may store the content of the response in the data storage (30).

The three of the data storage (30), the first display (50), and the operation instructor (60) may be configured by one personal computer. In this case, the personal computer executes an installed program to perform various displays, instructions to the units (101, 102), and data storage.

### <Operation Example>

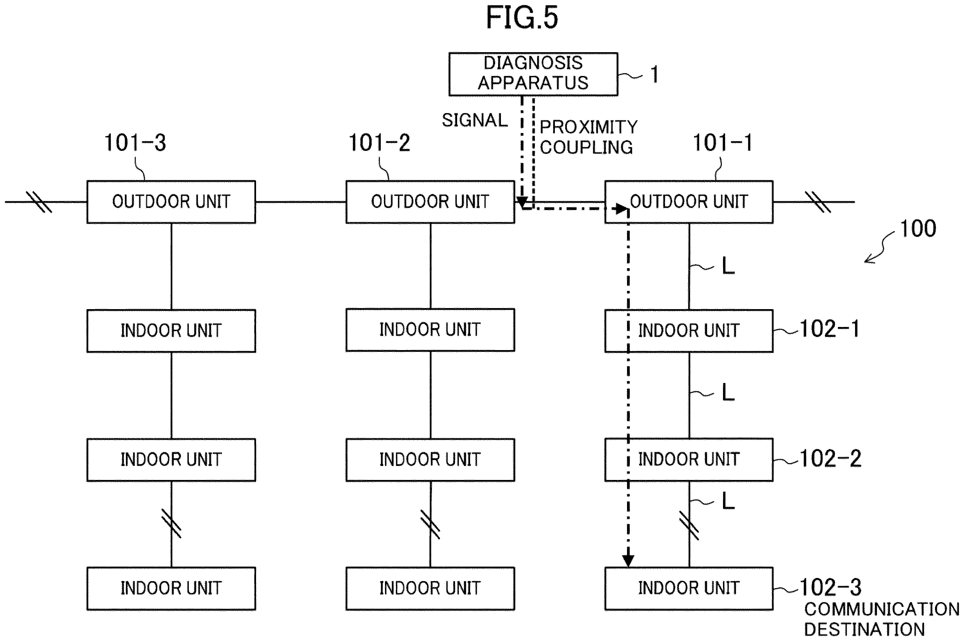

FIG. 5 illustrates communication between the diagnosis apparatus (1) and the units (101, 102). As shown in FIG. 5, the air-conditioning system (100) includes a plurality of outdoor units (e.g., communication devices) (101) and a plurality of indoor units (communication devices) (102). As described above, in the air-conditioning system (100), the units (101, 102) connected to the communication line (L) constitute a multihop network.

In FIG. 5, suffix numbers are added to reference numerals (e.g., 101-1, 101-2, etc.) to identify the plurality of outdoor units (101) and the plurality of indoor units (102). In the example of FIG. 5, an outdoor unit (101-1), an indoor unit (102-1), an indoor unit (102-2), and an indoor unit (102-3) are connected in this order to the communication line (L). More specifically, the outdoor unit (101-1) and the indoor units (102-1, 102-2, 102-3) are connected in a daisy chain.

The coupler (10) of the diagnosis apparatus (1) is proximately coupled to the communication line (L) between the outdoor unit (101-1) and an outdoor unit (101-2). In general, in a communication signal between communication devices, attenuation due to impedance of wires on the path or the communication devices, an increase in the noise due to signal reflection, or a standing wave occur. For example, depending on the position on the communication line (L) to which the coupler (10) is coupled, sufficient communication quality cannot be obtained between the diagnosis apparatus (1) and the units (101, 102). The user can search for a position with good communication conditions (i.e., a position with a high communication quality) by moving the coupler (10) on the communication line (L).

Here, assume that the user transmits a command from the diagnosis apparatus (1) to the indoor unit (102-3). More specifically, assume that the user inputs a command (hereinafter, referred to as a log transmission command) for transmitting the log data on the indoor unit (102-3) to the diagnosis apparatus (1).

In this example, the user inputs information for identifying the communication partner (i.e., the indoor unit (102-3)), an instruction for log transmission, or other information using an operator of the user interface. Once an instruction for log transmission or other information is input, the control unit (43) generates a log transmission command to be transmitted to the units (101, 102) based on the data collection function. The control unit (43) outputs the log transmission command to the communication line (L) via the transmitting section (41) designating the indoor unit (102-3) as the transmission destination.

The communication line (L) proximately coupled to the coupler (10) is connected to the outdoor unit (101-1) (see FIG. 5). The signal output from the diagnosis apparatus (1) is output to the communication line (i.e., daisy chain) (L) connecting the indoor units (102-1, 102-2, 102-3), via a signal line inside the outdoor unit (101-1). For example, if having a sufficiently high intensity, the signal output to the communication line (L) connecting the indoor units (102-1, 102-2, 102-3) reaches the indoor unit (102-3) directly.

In some cases, however, the signal output from the diagnosis apparatus (1) fails to reach the indoor unit (102-3) directly due to attenuation, such as the attenuation in the coupler (10) and the attenuation in the communication line (L), and other causes. In this case, a predetermined one of the indoor units (102-1, 102-2, 102-3) on the multihop network exhibits a signal relay function (what is called a multihop function). Not all the indoor units (102-1, 102-2, 102-3) perform the relay. The indoor unit (102) for the relay is determined in accordance with the degree of the attenuation of the signal.

Once a signal (i.e., a log transmission command) reaches the indoor unit (102-3), the indoor unit (102-3) processes the received log transmission command. Specifically, the indoor unit (102-3) outputs the stored log data to the communication line (L) connected to the indoor unit (102-3), designating the diagnosis apparatus (1) as the transmission partner.

Like the log transmission command, the log data transmitted by the indoor unit (102-3) is relayed by the units (101, 102) as necessary and reaches the diagnosis apparatus (1). In other words, multihop communication is established. In the diagnosis apparatus (1), the control unit (43) receives the log data via the receiving section (42).

The diagnosis apparatus (1) processes the received log data. For example, the log data is displayed on the first display (50) by the control unit (43). The log data may be stored in the data storage (30) by the control unit (43).

Similarly, when the user instructs the diagnosis apparatus (1) to make settings (e.g., the indoor temperature) of the air-conditioning system (100), the control unit (43) exhibits the setting function, and the diagnosis apparatus (1) and the units (101, 102) communicate with each other. When the user instructs the diagnosis apparatus (1) to perform a predetermined operation on the air-conditioning system (100), the operation instructor (60) functions to establish communication between the diagnosis apparatus (1) and the units (101, 102).

### <Advantages of This Embodiment>

As described above, this embodiment forms the communication path between the diagnosis apparatus (1) and the communication line (L) by proximity coupling. This mode can easily achieve the physical connection between the diagnosis apparatus (i.e., a communication apparatus) and the communication partner. In other words, this embodiment may shorten the time for establishing the environment for data collection at a work site.

By employing the proximity coupling, disconnection is less likely to occur at the connecting point between the diagnosis apparatus (1) and the air-conditioning system (100). The coupler (10) movable on the communication line (L) easily establishes communication with a high quality. By employing the proximity coupling in the coupler (10), the diagnosis apparatus (1) can be connected to the air-conditioning system (100) without stopping the air-conditioning system (100).

In the air-conditioning system (100), the units (101, 102) communicate with each other via a multihop network. The diagnosis apparatus (1) can communicate with the units (101, 102) over a wide range. In other words, the diagnosis apparatus (1) can diagnose the units (101, 102) and collect information over a wide range.

### «Other Embodiments»

The multihop network in the air-conditioning system (100) is not essential. The diagnosis apparatus (1) can also be used for the air-conditioning system (100) without any multihop network.

The coupler (10) is not limited to the illustrated examples as long as having a structure capable of achieving the proximity coupling.

The components of the diagnosis apparatus (1) may be selected as appropriate depending on the use. For example, the second display (11) may be omitted. By selecting the components as appropriate, the inspection or other operation can be completed only by the diagnosis apparatus (1) without using any other device.

While the embodiment and variations thereof have been described above, it will be understood that various changes in form and details may be made without departing from the spirit and scope of the claims. The elements according to embodiment, the variations thereof, and the other embodiments may be combined and replaced with each other.

### INDUSTRIAL APPLICABILITY

As described above, the present disclosure is useful for a communication apparatus and an air-conditioning system diagnosis apparatus.

### DESCRIPTION OF REFERENCE CHARACTERS

- 10: Coupler
- 11: Second Display (Display)
- 40: Communicator
- 50: First Display (Display)
- 100: Air-Conditioning System
- 101: Outdoor Unit (Communication Device)
- 102: Indoor Unit (Communication Device)
- L: Communication Line

## Claims

1. A communication apparatus comprising:
a coupler (10) to be proximately coupled to a communication line (L) connected between communication devices (101, 102); and
a communicator (40) configured to communicate with the communication devices (101, 102) via the communication line (L) and the coupler (10) proximately coupled.

2. The communication apparatus of claim 1, wherein
the communication devices (101, 102) are connected on a multihop network, and
the communicator (40) transmits, through relay by a predetermined one of the communication devices (101, 102) on the multihop network, a signal to the other one of the communication devices (101, 102).

3. The communication apparatus of claim 1 or 2, wherein
the coupler (10) is proximately coupled to the communication line (L) by an inductive or capacitive member.

4. The communication apparatus of claim 3, wherein
the coupler (10) is attachable to and detachable from the communication line (L).

5. The communication apparatus of claim 4, wherein
the coupler (10) is movable within a predetermined range of the communication line (L).

6. The communication apparatus of any one of claims 1 to 5, wherein
the communicator (40) performs at least one of collection of data stored in the communication devices (101, 102), collection of data flowing through the communication line (L), an operation instruction to the communication devices (101, 102), and setting of the communication devices (101, 102) via the coupler (10).

7. The communication apparatus of any one of claims 1 to 6, further comprising:
a display (11, 50) configured to display quality of communication in the coupler (10).

8. The communication apparatus of claim 7, wherein
the quality is indicated by a signal-to-noise ratio in the communication between the communication devices (101, 102) and the communicator (40).

9. The communication apparatus of claim 7 or 8, wherein
the quality is indicated by a noise level in the communication between the communication devices (101, 102) and the communicator (40).

10. The communication apparatus of any one of claims 7 to 9, wherein
the quality is indicated by a signal transmission and reception sensitivity in the communication between the communication devices (101, 102) and the communicator (40).

11. The communication apparatus of any one of claims 1 to 10, wherein
the communicator (40) transmits a signal at a higher signal level than the communication devices (101, 102).

12. The communication apparatus of any one of claims 1 to 11, wherein
the communication devices (101, 102) are units constituting an air-conditioning system (100).

13. An air-conditioning system diagnosis apparatus comprising the communication apparatus (10, 40) of any one of claims 1 to 12.
